(19) Europäisches Patentamt / European Patent Office / Office européen des brevets

(11) **EP 4 317 216 A1**

(12) **EUROPEAN PATENT APPLICATION**

(43) Date of publication:
**07.02.2024 Bulletin 2024/06**

(21) Application number: **22188454.7**

(22) Date of filing: **03.08.2022**

(51) International Patent Classification (IPC):
**C08F 210/16** (2006.01)     **C08L 23/08** (2006.01)
**C08J 5/18** (2006.01)

(52) Cooperative Patent Classification (CPC):
(C-Sets available)
**C08F 210/16; C08J 5/18; C08L 23/0815;**
C08J 2323/08; C08J 2423/08; C08L 2203/16;
C08L 2205/02; C08L 2308/00; C08L 2314/06

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Abu Dhabi Polymers Co. Ltd (Borouge) LLC
Abu Dhabi (AE)**

• **Borealis AG
1020 Vienna (AT)**

(72) Inventor: **GALGALI, Girish Suresh
PO Box 6925 Abu Dhabi (AE)**

(74) Representative: **Maiwald GmbH
Elisenhof
Elisenstraße 3
80335 München (DE)**

(54) **LOW DENSITY ETHYLENE TERPOLYMER COMPOSITION**

(57)    The present invention relates to a polyethylene composition comprising a multimodal terpolymer of ethylene and two different comonomers independently selected from alphaolefin comonomers having from 4 to 10 carbon atoms having a density of from 910 to less than 915 kg/m³, a process for producing said polyethylene composition, an article comprising said polyethylene composition and the use of said polyethylene composition for the production of an article.

**(Cont. next page)**

EP 4 317 216 A1

(52) Cooperative Patent Classification (CPC): (Cont.)

C-Sets
**C08F 210/16, C08F 2/001;**
**C08F 210/16, C08F 4/6492;**
**C08F 210/16, C08F 4/65925;**
**C08L 23/0815, C08L 23/0815;**
C08F 210/16, C08F 210/14, C08F 210/08,
C08F 2500/12, C08F 2500/26, C08F 2500/27,
C08F 2500/34, C08F 2500/35

**Description**

The present invention relates to a polyethylene composition comprising a multimodal terpolymer of ethylene and two different comonomers independently selected from alpha-olefin comonomers having from 4 to 10 carbon atoms having a density of from 910 to less than 915 kg/m$^3$, a process for producing said polyethylene composition, an article comprising said polyethylene composition and the use of said polyethylene composition for the production of an article.

**Technical background**

Polyethylene compositions, especially polyethylene compositions polymerized in the presence of a single site catalyst, are usually used for film applications or thin wall packaging applications. Single site catalysts, such as metallocene catalysts, produce polyethylenes having a relatively narrow molecular weight distribution at high polymerization rates.

For film applications single site catalysed unimodal polyethylene compositions are usually used due to their good optical properties, like low haze. However, the melt processing of such polymers is not satisfactory in regard of production rates and can additionally cause quality problems in the final product.

Multimodal polyethylene compositions with two or more different polyethylene components are better to process but tend towards a poor melt homogenization which can result in an inhomogeneous final product evidenced e.g. with high gel content of the final product. Another way of improving the processability of a polyethylene while maintain a narrow molecular weight distribution is to incorporate long chain branching into the polymer. However, long chain branches can promote directional orientation into the final product during processing leading to an imbalance of mechanical properties, reduced impact properties, reduced tear resistance and low clarity especially for films, such as blown films.

EP 257895 A1 discloses multimodal terpolymers of ethylene and two different comonomers independently selected from alpha-olefin comonomers having from 4 to 10 carbon atoms being produced in the presence of a metallocene catalyst and having a molecular weight distribution Mw/Mn of 2.0 to 5.0 and a density of 915 to 930 kg/m$^3$ which show good rheological properties needed for film applications.

However, for certain heavy duty packaging applications, such laminated films or heavy duty shipping sacks said terpolymers show insufficient toughness as measured e.g. by dart drop impact (DDI) strength.

Further, especially for multilayer film applications good sealing properties are beneficial.

Thus, there is a need in the art to provide polyethylene compositions, which show good processability and good optical properties together with high toughness and good sealing properties.

It has surprisingly been found that a polyethylene composition comprising a multimodal terpolymer of ethylene and two different comonomers independently selected from alpha-olefin comonomers having from 4 to 10 carbon atoms having a density of from 910 to less than 915 kg/m$^3$ can address the needs in the art and show an improved balance of properties of good processability and good optical properties together with high toughness and good sealing properties.

**Summary of the invention**

The present invention relates to a polyethylene composition comprising a multimodal terpolymer of ethylene and two different comonomers independently selected from alpha-olefin comonomers having from 4 to 10 carbon atoms,

> wherein the multimodal terpolymer comprises a first copolymer fraction being a copolymer of ethylene and a first comonomer selected from alpha-olefin comonomers having from 4 to 10 carbon atoms and a second copolymer fraction being a copolymer of ethylene and a second comonomer selected from alpha-olefin comonomers having from 4 to 10 carbon atoms, wherein the first comonomer differs from the second comonomer in their amount of carbon atoms, and
> has a density of from 910 to less than 915 kg/m$^3$, preferably from 911.0 to 914.5 kg/m$^3$, more preferably from 911.5 to 914.0 kg/$^3$, determined according to ISO 1183, and wherein the polyethylene composition has
> a melt flow rate MFR$_2$ of from 0.5 to 2.5 g/10 min, preferably from 0.6 to 2.2 g/10 min, more preferably from 0.7 to 2.0 g/10 min, determined according to ISO 1133 at 190°C and 2.16 kg.

Further, the present invention relates to a process for producing the polyethylene composition as described above or below, wherein the first copolymer fraction and the second copolymer fraction are polymerized both in the presence of a single site catalyst in different polymerization reactors of a multistage polymerization process.

Still further, the present invention relates to an article, preferably a film, comprising the polyethylene composition as described above or below.

Finally, the present invention relates to the use of the polyethylene composition as described above or below for the production of an article, preferably a film, more preferably a monolayer film, a layer of a multilayer film for flexible packaging, a collation shrink film or a heavy duty shipping sack.

**Definitions**

A polyethylene composition according to the present invention denotes a composition comprising one or more polymers, wherein the molar amounts of the components of the polymer composition add up to a total amount of at least 50 mol-% ethylene monomer units.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

A polymer is denoted 'ethylene copolymer' if the polymer is derived from ethylene monomer units and at least one alpha-olefin comonomer. The alpha-olefin comonomer preferably is selected from alpha-olefin comonomers with 4 to 10 carbon atoms, more preferably 4 to 6 carbon atoms. Suitable alpha-olefin comonomer species are 1-butene, 1-hexene, 4-methyl-1-pentene, 1-octene or their mixtures. Preferred are 1-butene and 1-hexene.

A polymer is denoted 'ethylene terpolymer' if the polymer is derived from ethylene monomer units and two alpha-olefin comonomers differing in their amount of carbon atoms. An ethylene terpolymer contains only units derivable from ethylene and the two comonomers selected from alpha-olefins having from 4 to 10 carbon atoms. The alpha-olefin comonomers preferably are selected from alpha-olefin comonomers with 4 to 10 carbon atoms, more preferably 4 to 6 carbon atoms. Suitable alpha-olefin comonomer species are 1-butene, 1-hexene, 4-methyl-1-pentene, 1-octene. Preferred are 1-butene and 1-hexene.

The multimodal terpolymer of ethylene and two different comonomers independently selected from alpha-olefin comonomers having from 4 to 10 carbon atoms of the present invention in the following is abbreviated 'multimodal ethylene terpolymer'.

In the gist of the present invention the term "multimodal" can mean multimodal with respect to molecular weight distribution and includes also therefore bimodal polymers. However, as explained in the detailed description of the components, the components can also be multimodal with respect to other properties, like the MFR or the density.

Usually, a polymer composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions.

Ideally, the molecular weight distribution curve for multimodal polymers of the invention will show two distinction maxima. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer, there is by definition a lower molecular weight component (LMW) and a higher molecular weight component (HMW). The LMW component has a lower molecular weight than the higher molecular weight component. This difference is preferably at least 5000 g/mol.

In the sense of the present invention it is preferred that all olefins are alpha olefins.

The "density" of the materials described in the present description and claims means the density determined according to ISO 1183.

The "melt flow rate" (= MFR) of the polymers described in the present description and claims means the MFR determined according to ISO 1133.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

**Detailed description of the invention**

Polyethylene composition

The polyethylene composition preferably comprises the multimodal ethylene terpolymer in an amount of from 85.0 to 100 wt%, more preferably from 90.0 to 99.999 wt%, still more preferably from 95.0 to 99.99 wt%, based on the total weight of the polyethylene composition.

The polyethylene composition can comprise further polymeric resins different from the multimodal ethylene terpolymer in an amount of 0 to 15.0 wt%, based on the total weight of the polyethylene composition.

It is preferred that the multimodal ethylene terpolymer is the only polymeric component of the polyethylene composition. This means that the polymeric components of the polyethylene composition preferably consist of the multimodal ethylene terpolymer.

The polyethylene composition can further comprise additives and/or admixtures.

Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the overall weight of the polyethylene composition).

Admixtures are preferably selected from the group consisting of pigments, fillers, antiblocking agents and mixtures thereof, preferably these admixtures are contained in an the range from 0 to 5 wt.-%, preferably in the range from 0 to 3 wt.-%, more preferably in the range from 0 to 2 wt.-% and most preferably from 0 to 1 wt.-% based on the overall weight of the polyethylene composition.

Additives and/or admixtures can be added to the polyethylene composition in form of masterbatches in which the additives and/or admixtures are embedded in carrier polymers in concentrated form in order to ensure better distribution of the additives and/or admixtures in the polyethylene composition. In the case that the additives and/or admixtures are added in form of a masterbatch, the amount of carrier polymer is added to the amount of additives and/or admixtures, not to the amount of polymeric components in the polyethylene composition.

The polyethylene composition preferably comprises ethylene monomer units and comonomer units selected from two different comonomers independently selected from alpha-olefins having from 4 to 10 carbon atoms.

The two different comonomers are preferably selected from 1-butene, 1-hexene, 4-methyl-1-pentene, 1-octene, more preferably 1-butene, 1-hexene and 1-octene, still more preferably from 1-butene and 1-hexene.

It is preferred that the polymeric units present in the polyethylene composition consist of the ethylene monomer units and comonomer units selected from two different comonomers independently selected from alpha-olefins having from 4 to 10 carbon atoms.

The first comonomer is preferably selected from 1-butene, 1-hexene, 4-methyl-1-pentene, 1-octene, more preferably 1-butene, 1-hexene and 1-octene, still more preferably from 1-butene.

The second comonomer is preferably selected from 1-butene, 1-hexene, 4-methyl-1-pentene, 1-octene, more preferably 1-butene, 1-hexene and 1-octene, still more preferably from 1-hexene.

The polyethylene composition preferably has a total comonomer content of from 2.4 to 6.0 mol%, preferably 2.7 to 5.0 mol%, more preferably 3.0 to 4.5 mol%.

The polyethylene composition preferably has a comonomer content of the first comonomer, preferably a 1-butene content, of from 0.4 to 2.0 mol%, preferably from 0.5 to 1.5 mol%, more preferably from 0.6 to 1.2 mol%, based on the total molar content of monomer units of the polyethylene composition.

Further, the polyethylene composition preferably has a comonomer content of the second comonomer, preferably a 1-hexene content, of from 2.0 to 4.0 mol%, preferably from 2.2 to 3.5 mol%, more preferably from 2.4 to 3.3 mol%, based on the total molar content of monomer units of the polyethylene composition.

The polyethylene composition has a melt flow rate $MFR_2$ of from 0.5 to 2.5 g/10 min, preferably from 0.6 to 2.2 g/10 min, more preferably from 0.7 to 2.0 g/10 min, determined according to ISO 1133 at 190°C and 2.16 kg.

Further, the polyethylene composition preferably has a melt flow rate $MFR_5$ of from 1.5 to 7.0 g/10 min, more preferably from 1.7 to 6.0 g/10 min, still more preferably from 2.0 to 5.0 g/10 min, determined according to ISO 1133 at 190°C and 5 kg.

Still further, the polyethylene composition preferably has a melt flow rate $MFR_{21}$ of from 10.0 to 35.0 g/10 min, more preferably from 12.5 to 32.5 g/10 min, still more preferably from 15.0 to 30.0 g/10 min, determined according to ISO 1133 at 190°C and 21.6 kg.

Furthermore, the polyethylene composition preferably has a flow rate ratio $FRR_{21/2}$, being the ratio of $MFR_{21}$ to $MFR_2$ of from 15.0 to 25.0, more preferably from 16.5 to 23.5, still more preferably from 17.5 to 22.5.

Additionally, the polyethylene composition preferably has a flow rate ratio $FRR_{21/5}$, being the ratio of $MFR_{21}$ to $MFR_5$ of from 4.5 to 10.0, more preferably from 5.5 to 9.0, still more preferably from 6.0 to 8.0.

Further, the polyethylene composition preferably has a polydispersity index being the ratio of weight average molecular weight to number average molecular weight Mw/Mn of from 2.0 to 6.0, more preferably from 2.5 to 5.5.

Still further, the polyethylene composition preferably has a melting temperature of from 120 to 130°C, more preferably from 123 to 128°C, determined by DSC measurement.

Furthermore, the polyethylene composition preferably has an enthalpy of fusion of from 100 to 115 J/g, more preferably from 103 to 110 J/g, determined by DSC measurement.

Additionally, the polyethylene composition preferably has a degree of crystallinity of from 30 to 40%, more preferably from 35 to 38%, determined by DSC measurement.

The polyethylene composition preferably has a molecular structure comprising fractions of varying lamellar thickness. The thickness the different lamellar fractions can be measured by Successive Self-nucleation and Annealing (SSA) thermal fractionation technique that can be run on a Differential Scanning Calorimeter (DSC) as described below in the measurement method section.

The SSA technique consists of sequential application of self-nucleation and annealing steps to a polymer sample. After thermal conditioning (multiple heating and cooling cycles), a final DSC heating run reveals the distribution of melting temperatures induced by the SSA thermal treatment as a result of the heterogeneous nature of the chain structure of the polymer under analysis. The SSA technique is particularly useful to study the degree and distribution of short chain branches produced by the copolymerization of ethylene with alpha-olefins.

It is preferred that the amount of the lamellar fraction having a lamellar thickness of more than 11.8 nm to 21.7 nm is from 5.0 to 25.0%, more preferably from 7.5 to 22.5%, still more preferably from 10.0 to 20.0%, based on the total amount of lamellar fractions.

It is further preferred that the amount of the lamellar fraction having a lamellar thickness of more than 8.1 nm to 11.8 nm is from 17.5 to 40.0%, more preferably from 20.0 to 37.5%, still more preferably from 22.5 to 35.0%, based on the total amount of lamellar fractions.

Still further, it is preferred that the amount of the lamellar fraction having a lamellar thickness of more than 6.1 nm to 8.1 nm is from 12.5 to 30.0%, more preferably from 15.0 to 27.5%, still more preferably from 17.5 to 25.0%, based on the total amount of lamellar fractions.

Furthermore, it is preferred that the amount of the lamellar fraction having a lamellar thickness of 0 nm to 6.1 nm is from 30.0 to 50.0%, more preferably from 32.5 to 47.5%, still more preferably from 35.0 to 45.0%, based on the total amount of lamellar fractions.

The amounts of the fractions having different lamella thicknesses are given in weight-% (wt%).

The ethylene terpolymer is a terpolymer of ethylene and two different comonomers independently selected from alpha-olefins having from 4 to 10 carbon atoms.

The two different comonomers are preferably selected from 1-butene, 1-hexene, 4-methyl-1-pentene, 1-octene, more preferably 1-butene, 1-hexene and 1-octene, still more preferably from 1-butene and 1-hexene.

The ethylene terpolymer preferably has a total comonomer content of from 2.4 to 6.0 mol%, preferably 2.7 to 5.0 mol%, more preferably 3.0 to 4.5 mol%.

The ethylene terpolymer comprises a first copolymer fraction being a copolymer of ethylene and a first comonomer selected from alpha-olefin comonomers having from 4 to 10 carbon atoms and a second copolymer fraction being a copolymer of ethylene and a second comonomer selected from alpha-olefin comonomers having from 4 to 10 carbon atoms, wherein the first comonomer differs from the second comonomer in their amount of carbon atoms

The first comonomer is preferably selected from 1-butene, 1-hexene, 4-methyl-1-pentene, 1-octene, more preferably 1-butene, 1-hexene and 1-octene, still more preferably from 1-butene.

The second comonomer is preferably selected from 1-butene, 1-hexene, 4-methyl-1-pentene, 1-octene, more preferably 1-butene, 1-hexene and 1-octene, still more preferably from 1-hexene.

The ethylene terpolymer preferably has a comonomer content of the first comonomer, preferably a 1-butene content, of from 0.4 to 2.0 mol%, preferably from 0.5 to 1.5 mol%, more preferably from 0.6 to 1.2 mol%, based on the total molar content of monomer units of the ethylene terpolymer.

Further, the ethylene terpolymer preferably has a comonomer content of the second comonomer, preferably a 1-hexene content, of from 2.0 to 4.0 mol%, preferably from 2.2 to 3.5 mol%, more preferably from 2.4 to 3.3 mol%, based on the total molar content of monomer units of the ethylene terpolymer.

The ethylene terpolymer is multimodal in view of the comonomer content, since the comonomers of the two ethylene copolymer fractions differ in their amount of carbon atoms.

The first copolymer fraction is preferably a copolymer of ethylene and 1-butene comonomer and the second copolymer fraction is preferably a copolymer of ethylene and 1-hexene.

The first copolymer fraction preferably is present in the ethylene terpolymer in an amount of from 35 to 55 wt%, more preferably from 37 to 52 wt%, still more preferably from 40 to 50 wt%, based on the total weight of the ethylene terpolymer.

The first copolymer fraction preferably has a density of from 920.0 to 930.0 kg/m$^3$, more preferably from 925.0 to 928.0 kg/m$^3$, determined according to ISO 1183.

Further, the first copolymer fraction preferably has a melt flow rate $MFR_2$ of from 1.0 to 5.0 g/10 min, more preferably from 1.5 to 3.5 g/10 min, determined according to ISO 1133 at 190°C and 2.16 kg.

The second copolymer fraction preferably is present in the ethylene terpolymer in an amount of from 65 to 45 wt%, more preferably from 63 to 48 wt%, still more preferably from 60 to 50 wt%, based on the total weight of the ethylene terpolymer.

The weight ratio of the first copolymer fraction to the second copolymer fraction in the ethylene terpolymer preferably is in the range of from 35 : 65 to 55 : 45, more preferably from 37 : 63 to 52 : 48, still more preferably from 40 : 60 to 50 :50.

The second copolymer fraction preferably has a density of from 890.0 to 910.0 $kg/m^3$, more preferably from 895.0 to 905.0 $kg/m^3$.

Further, the second copolymer fraction preferably has a melt flow rate $MFR_2$ of from 0,01 to 10.0 g/10 min, more preferably from 0.1 to 1.5 g/10 min.

When produced in a multistage process, in which the second copolymer fraction is polymerized in a subsequent polymerization stage and is not accessible to direct measurement, the density and $MFR_2$ of the second copolymer fraction can be calculated according to the formulas described in the determination methods in the example section below.

The ethylene terpolymer has a density of from 910 to less than 915 $kg/m^3$, preferably from 911.0 to 914.5 $kg/m^3$, more preferably from 911.5 to 914.0 $kg/^3$, determined according to ISO 1183.

The ethylene terpolymer preferably has a melt flow rate $MFR_2$ of from 0.5 to 2.5 g/10 min, preferably from 0.6 to 2.2 g/10 min, more preferably from 0.7 to 2.0 g/10 min, determined according to ISO 1133 at 190°C and 2.16 kg.

Further, the ethylene terpolymer preferably has a melt flow rate $MFR_5$ of from 1.5 to 7.0 g/10 min, more preferably from 1.7 to 6.0 g/10 min, still more preferably from 2.0 to 5.0 g/10 min, determined according to ISO 1133 at 190°C and 5 kg.

Still further, the polyethylene composition preferably has a melt flow rate $MFR_{21}$ of from 10.0 to 35.0 g/10 min, more preferably from 12.5 to 32.5 g/10 min, still more preferably from 15.0 to 30.0 g/10 min, determined according to ISO 1133 at 190°C and 21.6 kg.

The ethylene terpolymer is preferably obtainable by polymerization in the presence of a single site catalyst system. The single site catalyst system preferably comprises catalytically active metallocene compound or complex combined with a cocatalyst.

Process

Further, the present invention relates to a process for producing the polyethylene composition as described above or below, wherein the first copolymer fraction and the second copolymer fraction are polymerized both in the presence of a single site catalyst in different polymerization reactors of a multistage polymerization process.

It is preferred that all embodiments and properties of the polyethylene composition as described above or below apply to the process of the present invention.

The single site catalyst preferably comprises catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene compound of a transition metal which bears at least one organic (coordination) ligand and exhibits the catalytic activity alone or together with a cocatalyst. The transition metal compounds are well known in the art and preferably covers compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (C) has the following formula (1):

$$(L)_m R_n M X_q \qquad (I)$$

wherein

"M" is a transition metal (M) transition metal (M) of Group 3 to 10 of the Periodic Table (IUPAC 2007),
each "X" is independently a monoanionic ligand, such as a σ -ligand,
each "L" is independently an organic ligand which coordinates to the transition metal "M",
"R" is a bridging group linking said organic ligands (L),
"m" is 1, 2 or 3, preferably 2,
"n" is 0, 1 or 2, preferably 1,
"q" is 1, 2 or 3, preferably 2 and
m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf).

"X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

Most preferred the metallocene catalyst, which means the catalytically active metallocene complex, as defined above, is used together With a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylaluminoxane (MAO), tetraisobutylalumoxane (TIBAO) or hexaisobutylalumoxane (HIBAO).

The first and second copolymer fractions of the ethylene terpolymer may be produced in any suitable polymerization process known in the art, which comprise at least two polymerization reactors, where polymerization is typically carried out in solution, slurry, bulk or gas phase. The first copolymer fraction is preferably produced in a first polymerization reactor and a second copolymer fraction is preferably produced in a second polymerization reactor. The first polymerization reactor and the second polymerization reactor may be connected in any order, i.e. the first polymerization reactor may precede the second polymerization reactor, or the second polymerization reactor may precede the first polymerization reactor or, alternatively, polymerization reactors may be connected in parallel. However, it is preferred to operate the polymerization reactors in cascaded mode. The polymerization reactors may operate in slurry, solution, or gas phase conditions or their combinations.

Suitable processes comprising cascaded slurry and gas phase polymerization reactors are disclosed, among others, in WO-A-92/12182 and WO-A-96/18662.

It is often preferred to remove the reactants of the preceding polymerization reactor from the polymer before introducing it into the subsequent polymerization reactor. This is preferably done when transferring the polymer from one polymerization reactor to another.

The catalyst may be transferred into the polymerization reactor by any means known in the art. For example, it is possible to suspend the catalyst in a diluent and maintain it as homogeneous slurry, to mix the catalyst with a viscous mixture of grease and oil and feed the resultant paste into the polymerization reactor or to let the catalyst settle and introduce portions of thus obtained catalyst mud into the polymerization reactor.

The polymerization in the first polymerization reactor is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mol, preferably from about 2 to about 20 % by mol and in particular from about 3 to about 12 % by mol.

The temperature in the slurry polymerization is typically from 50 to 115°C, preferably from 60 to 110°C and in particular from 70 to 100°C. The pressure is from 1 to 150 bar, preferably from 10 to 100 bar.

The slurry polymerization may be conducted in any known reactor used for slurry polymerization.

Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 80 to 110°C, preferably from 85 to 105°C and the pressure is from 30 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined with a suitable concentration method, e.g. as disclosed in EP-A-1310295 and EP-A-1591460.

Hydrogen may be fed into the reactor to control the molecular weight of the polymer as known in the art. Furthermore, comonomers selected from alpha-olefins having from 4 to 10 carbon atoms, such as 1-butene, are preferably added into the reactor e.g. to control the density of the polymer product. The actual amount of such hydrogen and comonomer feeds depends on the catalyst that is used and the desired melt index (or molecular weight) and density (or comonomer content) of the resulting polymer.

The polymerization in the second polymerization reactor is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with comonomers selected from alpha-olefins having from 4 to 10 carbon atoms, such as 1-hexene, in the presence of a polymerization catalyst and, preferably in the presence of the reaction mixture from the first polymerization reactor in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, amongst others, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised.

The vaporisation heat then contributes to the removal of the reaction heat. This kind of operation is called condensed mode and variations of it are disclosed, among others, in WO-A-2007/025640, USA-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed.

Typically the fluidized bed polymerization reactor is operated at a temperature within the range of from 50 to 100°C, preferably from 65 to 90°C. The pressure is suitably from 10 to 40 bar, preferably from 15 to 30 bar.

The polymerization of the first copolymer fraction and second copolymer fraction in the first and second polymerization reactors may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer.

The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 25 to 70°C.

The pressure is not critical and is typically from 1 to 150 bar, preferably from 10 to 100 bar. The catalyst components are preferably all introduced to the prepolymerization step.

Preferably the reaction product of the prepolymerization step is then introduced to the first polymerization reactor.

The process for producing the polyethylene composition preferably comprises the following polymerization steps:

a) polymerizing in a first polymerization reactor ethylene and the first comonomer in the presence of the single site catalyst and obtaining a first reaction mixture comprising the first copolymer fraction and the single site catalyst;
b) transferring the first reaction mixture from the first polymerization reactor to a second polymerization reactor;
c) polymerizing in the second polymerization reactor ethylene and the second comonomer in the presence of the single site catalyst and the first copolymer fraction and obtaining a second reaction mixture comprising the first copolymer fraction, the second copolymer fraction and the single site catalyst;
d) withdrawing the second reaction mixture from the second polymerization reactor; and
e) compounding the second reaction mixture and obtaining the polyethylene composition

The first polyermization reactor preferably is a bulk reactor operated as described above.

The second polyermization reactor preferably is a gas phase reactor reactor operated as described above.

The first comonomer preferably is 1-butene.

The second comonomer preferably is 1-hexene.

It is preferred that the molar ratio of the first comonomer to ethylene for the polymerization of the first copolymer fraction is in the range of more than 110 mol/kmol to 350 mol/kmol, more preferably from 125 mol/kmol to 300 mol/kmol, still more preferably from 150 to 275 mol/kmol.

Futrher, the second comonomer to ethylene for the polymerization of the second copolymer fraction is preferably in the range of 15 mol/kmol to less than 41 mol/kmol, more preferably from 17 mol/kmol to 40 mol/kmol, still more preferably from 20 to 30 mol/kmol.

The hydrogen to ethylene ratio for the polymerization of the first copolymer fraction is preferably in the range of more than 0.05 mol/kmol to 1.0 mol/kmol, preferably from 0.10 mol/kmol to 0.50 mol/kmol, more preferably from 0.15 to 0.35 mol/kmol.

The hydrogen to ethylene ratio for the polymerization of the second copolymer fraction is preferably in the range of more than 0.01 mol/kmol to 0.75 mol/kmol, preferably from 0.05 mol/kmol to 0.30 mol/kmol, more preferably from 0.10 to 0.25 mol/kmol.

The ethylene terpolymer obtained from the polymerization stages as described above is then typically extruded and pelletized. The extrusion may be conducted in a manner known in the art in a twin screw extruder. One example of suitable twin screw extruders is a co-rotating twin screw extruder. These are manufactured, among others, by Copernion or Japan Steel Works. Another example is a counter rotating twin screw extruder. Such extruders are manufactured, among others, by Kobe Steel and Japan Steel Works. Before the extrusion at least part of the desired additives, as mentioned above, are preferably mixed with the ethylene terpolymer. The extruders typically include a melting section where the ethylene terpolymer is melted and a mixing section where the ethylene terpolymer melt is homogenised. Melting and homogenisation are achieved by introducing energy into the ethylene terpolymer. Suitable level of specific energy input (SEI) is from about 150 to about 450 kWh/ton ethylene terpolymer, preferably from 175 to 350 kWh/ton.

Article

Still further, the present invention relates to an article, preferably a film, comprising the polyethylene composition as described above or below.

It is preferred that all embodiments and properties of the polyethylene composition and the process for producing the polyethylene composition as described above or below apply to the article of the present invention.

The article can be a monolayer film, a layer of a multilayer film for flexible packaging, a layer of a collation shrink film or a layer of a heavy duty shipping sack.

The terms "monolayer film" and "multilayer film" have well known meanings in the art.

The layer of the monolayer or multilayer film or sack may consist of the polyethylene composition comprising the ethylene terpolymer and optional additives, as such or of a blend of the polyethylene composition together with further polymer(s). In case of blends, any further polymer is different from the ethylene terpolymer and is preferably a polyolefin. Part of the above mentioned additives, like processing aids, can optionally be added to the polymer composition during the film preparation process. Preferably, the layer comprises at least 50 wt%, preferably at least 60 wt%, preferably at least 70 wt%, more preferably at least 80 wt%, of the polyethylene composition of the invention. More preferably said layer of the film of invention consists of the polyethylene composition.

Accordingly, the film or sack may comprise a single layer (ie. monolayer) or may be multilayered. Multilayer films or sacks typically, and preferably, comprise at least 3 layers.

The films are produced by any conventional film extrusion procedure known in the art being suitable for producing blown films or cast films.

A blown film is typically produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown film is a multilayer film then the various layers are typically coextruded. The skilled man will be aware of suitable extrusion conditions.

A cast film is typically produced by extrusion through an slot die, passed over a water-cooled roller and wound up. Conventional film production techniques may be used in this regard. If the preferable cast film is a multilayer film then the various layers are typically coextruded. The skilled man will be aware of suitable extrusion conditions.

The films or sacks are preferably blown films.

The resulting films or sacks may have any thickness conventional in the art. The thickness of the film is not critical and depends on the end use. Thus, films may have a thickness of, for example, 300 $\mu$m or less, typically 6 to 200 $\mu$m, preferably 10 to 180 $\mu$m, e.g. 20 to 150 $\mu$m or 20 to 120 $\mu$n. If desired, the polyethylene composition of the invention enables thicknesses of less than 100 $\mu$m, e.g. less than 50 $\mu$m. Blown films with thickness even less than 20 $\mu$m can also be produced whilst maintaining good mechanical properties.

The article preferably is a film which as one or more, preferably all of the following properties:

- a dart drop impact (DDI) of at least 1000 g, preferably at least 1100 g, more preferably at least 1200 g, and/or an upper limit of preferably not more than 2000 g, determined according to BICM90728 on a monolayer blown film having a thickness of 40 $\mu$m; and/or
- a hot tack temperature at 1 N maximum force of from 65 to 90°C, preferably from 70 to 88°C, more preferably from 75 to 85°C, determined according to BICM90720 on a monolayer blown film having a thickness of 40 $\mu$m; and/or
- a gloss at 60° of 20 to 50, determined according to ISO 2813 on a monolayer blown film having a thickness of 40 $\mu$m.

Use

Finally, the present invention relates to the use of the polyethylene composition as described above or below for the production of an article, preferably a film, more preferably a monolayer film, a layer of a multilayer film for flexible packaging, a collation shrink film or a heavy duty shipping sack.

It is preferred that all embodiments and properties of the polyethylene composition, the process for producing the polyethylene composition and the article as described above or below apply to the use of the present invention.

The invention will now be described with reference to the following non-limiting examples.

**Examples**

1. **Determination methods**

Melt flow rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer.

The $MFR_2$ of polyethylene was measured at a temperature of 190 °C and a load of 2.16 kg. The $MFR_5$ of polyethylene was measured at a temperature of 190 °C and a load of 5 kg. The $MFR_{21}$ of polyethylene was measured at a temperature of 190 °C and a load of 21.6 kg.

The $MFR_2$ of the second ethylene copolymer fraction polymerized in the second polymerization reactor is calculated from the $MFR_2$ of the first ethylene copolymer fraction polymerized in the first polymerization reactor and the $MFR_2$ of the ethylene terpolymer as follows:

$$\mathrm{LogMFR_{final} = wt\%_{1st} \times LogMFR_{1st} + wt\%_{2nd} \times LogMFR_{2nd}}$$

wherein

- "final" means "of the ethylene terpolymer
- "1st" means "of the first ethylene copolymer fraction produced in the first reactor

- "2nd" means "of the second ethylene copolymer fraction produced in the second reactor.

Density

Density of the polymer was measured according to ISO 1183-1:2004 Method A on compression moulded specimen prepared according to EN ISO 1872-2 (Feb 2007) and is given in $kg/m^3$.

The density of the second ethylene copolymer fraction polymerized in the second polymerization reactor is calculated from the density of the first ethylene copolymer fraction polymerized in the first polymerization reactor and the density of the ethylene terpolymer as follows:

$$\text{Density}_{2nd} = (\text{density}_{final} - \text{wt\%}_{1st} \times \text{density } 1^{st}) / \text{wt\%}_{2nd}$$

wherein

- "final" means "of the ethylene terpolymer
- "1st" means "of the first ethylene copolymer fraction produced in the first reactor
- "2nd" means "of the second ethylene copolymer fraction produced in the second reactor.

Comonomer content

$^{13}$C-NMR spectra were recorded on Bruker 400 MHz spectrometer at 130 °C from samples dissolved in 1, 2, 4-trichlorobenzene/benzene-d6 (90/10 w/w). Conversion between %wt and %mol can be carried out by calculation.

DSC Analysis

Melting temperature Tm and Crystallization temperature Tc were measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of 25 to +225°C. Crystallization temperature was determined from the cooling step, while melting temperature (Tm) and melting enthalpy (Hm) are determined from the second heating step.

Lamella Thickness

Successive Self-Nucleation/Annealing (SSA) technique enhances the potential molecular fractionation that can occur during crystallization by magnifying the small effects through annealing of the unmelted crystals at each stage of the process. General references and additional information can be found in a review article by Müller and Arnal [A.J. Müller, M.L. Arnal, Thermal fractionation of polymers, Prog. Polym. Sci. 30 (2005) 559-603]. SSA was performed on an indium and tin calibrated TA Instruments Q2000 differential scanning calorimeter equipped with RCS90 cooling system. A sample mass of 5-10 mg was used from compression moulded sheets. All samples were encapsulated in Tzero aluminium pans. Ultrahigh purity dry nitrogen was used as an inert atmosphere. The experimental protocol is as follows:

(a) Erasure of previous thermal history by heating the sample from room temperature to 180°C at 20°C/min and by holding isothermally for 5 minutes.
(b) In this method, 8 subsequent cooling/heating cycles at 10°C/min were utilized and the first isothermal crystallization temperature was selected to be 126°C. The duration of each isothermal crystallization step is 5 minutes. After each isothermal crystallization step, the sample is cooled to 30°C and held isothermally for 5 minutes.
(c) The subsequent isothermal temperatures were always maintained at 5°C lower than the previous step, i.e., the sample is heated from 30°C to the second isothermal crystallization temperature of 121°C.
(d) After the last isothermal crystallization step at 91°C, the sample is cooled down to 0°C, and the melting curve is obtained by heating the cooled sample at a heating rate of 10°C/min up to 180°C.

The final heating run after an SSA treatment exhibits a series of melting peaks that correspond to the number of SSA cycles, where annealing was promoted. Gibbs-Thompson equation can then be used to establish a correlation between melting temperature and lamellae thickness:

$$T_m = T_m^0 \{1 - (2\sigma_e / \Delta H_m^0 L_c)\}, \tag{4}$$

where $T_m^0$ is equilibrium melting point of infinitely thick crystal, $\sigma_e$ is the specific surface energy, $\Delta H_m^0$ is enthalpy of melting per mass unit, $L_c$ is lamellae thickness and $T_m$ is melting temperature of the lamellae. $T_m^0$, $\sigma_e$, and $\Delta H_m^0$ have been taken to be 415 K, 93 × 10$^{-3}$ J/m$^3$, and 3 × 10$^8$ J/m$^3$, respectively [L. Mandelkern, R.G. Alamo, Thermodynamic quantities governing melting, in: Phys. Prop. Polym. Handb., Springer, 2007: pp. 165-186.].

The melt enthalpy is calculated from the quotient of the heat flow volume and initial weight of the sample between the extrapolated onset and end of melting, as described in ISO 11357-3. A fixed integration approach, in steps of 10°C, is used for the melting curve quantification to determine the lamellae thickness distribution.

Dart drop impact (DDI)

DDI was measured according to ISO7765-1, method A (Alternative Testing Technique) on blown films with a thickness of 40 μm, prepared as described in the example section below. A dart with a 38 mm diameter hemispherical head was dropped from a height of 0.66 m onto a film clamped over a hole. Successive sets of twenty specimens were tested. One weight was used for each set and the weight was increased (or decreased) from set to set by uniform increments. The weight resulting in failure of 50 % of the specimens was calculated and reported.

Hot tack force

Hot tack was measured on DTC in line with ASTM F 1921 in the following conditions: 3 bars, sealing time 1 second, cooling time 0.1 second (release), 2 teflonized jaws, hot tack force 1 N, peel speed 200 mm/s, sealing pressure 0.25 N/mm$^2$, dwell/sealing time 1 second, delay time 100 ms; test/peel speed 200 mm/s; flat jaws covered with teflon tape.

Optical properties

**Gloss** was measured on monolayer blown films with a thickness of 40 μm, prepared as described in the example section below according to DIN 67530/ISO 2813 at an angle of 60°. Gloss values are recorded and reported as gloss units (GU).

## 2. Polyethylene composition

The catalyst used for the production of the ethylene terpolymers of examples IE1-IE3 and CE1-CE4 was a metallocene catalyst with metallocene complex bis(1-methyl-3-n-butyl cyclopentadienyl)Zr(IV)Cl$_2$ (CAS No. 151840-68-5) supported on Albemarle ActivCat® carrier.

Polymerization of the ethylene terpolymers of examples IE1-IE3 and CE1-CE4 was performed in a Borstar® plant comprising a prepolymerization loop reactor, a loop reactor and a gas phase reactor, whereby the slurry from the prepolymerization reactor was withdrawn intermittently and directed into the loop reactor, subsequently the slurry was withdrawn from the loop reactor intermittently by using settling legs and directed to a flash vessel operated at a temperature of 50°C and a pressure of 3 bar and from there the polymer was directed to the gas phase reactor (GPR).

The polymerization conditions are listed in Table 1 below.

Table 1: Polymerization conditions of the ethylene terpolymers of IE1-IE3 and CE1-CE4

|  | CE1 | CE2 | CE3 | IE1 | IE2 | IE3 | CE4 |
|---|---|---|---|---|---|---|---|
| **Prepolymerization reactor** | | | | | | | |
| Temp. (°C) | 50 | 50 | 50 | 50 | 50 | 50 | 50 |
| Catalyst feed (g/h) | 23.3 | 19.5 | 24.9 | 14.9 | 17.0 | 12.1 | 40.0 |
| Temp. (°C) | 50 | 50 | 50 | 50 | 50 | 50 | 50 |
| Press. (kPa) | 5637 | 5645 | 5649 | 5634 | 5639 | 5644 | 5639 |
| C2 (kg/h) | 4.0 | 3.9 | 4.0 | 4.0 | 4.0 | 4.0 | 4.0 |
| H2 (g/h) | 0.04 | 0.04 | 0.04 | 0.04 | 0.0 | 0.0 | 0.0 |
| C4 (g/h) | 100 | 299.9 | 300.0 | 300.0 | 300.0 | 300.0 | 300.0 |

(continued)

|  | CE1 | CE2 | CE3 | IE1 | IE2 | IE3 | CE4 |
|---|---|---|---|---|---|---|---|
| **Prepolymerization reactor** | | | | | | | |
| Split (%) | 3.5 | 3.5 | 3.7 | 3.5 | 3.4 | 3.6 | 3.5 |
| **loop reactor** | | | | | | | |
| Temp. (°C) | 85 | 85 | 85 | 85 | 85 | 85 | 85 |
| Press. (kPa) | 5293 | 5293 | 5303 | 5286 | 5290 | 5299 | 5279 |
| C2 conc. (mol-%) | 4.1 | 3.8 | 5.8 | 3.4 | 3.5 | 3.9 | 3.2 |
| H2 feed (kg/h) | 0.002 | 0.002 | 0.001 | 0.001 | 0.0 | 0.0 | 0.0 |
| H2/C2 ratio (mol/kmol) | 0.24 | 0.26 | 0.14 | 0.20 | 0.21 | 0.19 | 0.20 |
| C4/C2 ratio (mol/kmol) | 78 | 80 | 57 | 230 | 227 | 232 | 61 |
| Total diluent feed (kg/h) | 123.9 | 130.7 | 130.7 | 136.6 | 145.5 | 145.4 | 125.2 |
| Catalyst activity | 1.8 | 2.2 | 1.8 | 3.2 | 2.9 | 4.7 | 1.1 |
| Catalyst productivity after loop | 1.4 | 1.7 | 1.3 | 2.4 | 2.0 | 3.3 | 0.8 |
| Split (%) | 38.4 | 38.1 | 37.4 | 39.7 | 37.6 | 45.5 | 38.1 |
| Density (kg/m$^3$) | 939.7 | 939.9 | 938.3 | 927.0 | 926.9 | 925.9 | 939.5 |
| MFR$_2$ (g/10 min) | 5.1 | 7.2 | 1.6 | 2.8 | 2.2 | 1.7 | 1.7 |
| **GPR** | | | | | | | |
| Temp. (°C) | 75 | 75 | 75 | 75 | 75 | 75 | 75 |
| Press. (kPa) | 2000 | 2000 | 2000 | 2000 | 2000 | 2000 | 2000 |
| Bed level (cm) | 160 | 150 | 160 | 160 | 160 | 160 | 160 |
| C2 partial Press. (kPa) | 572 | 630 | 634 | 678 | 891 | 741 | 543 |
| C3 (mol%) | 1 | 1 | 1 | 1 | 1 | 1 | 2 |
| H2/C2 ratio (mol/kmol) | 0.22 | 0.22 | 0.20 | 0.18 | 0.14 | 0.18 | 0.28 |
| C6/C2 ratio (mol/kmol) | 27.57 | 31.70 | 31.32 | 25.82 | 27.14 | 29.50 | 35.23 |
| C6 (kg/h) | 9.51 | 11.00 | 11.44 | 9.81 | 11.20 | 9.68 | 12.69 |
| C2 (kg/h) | 68.39 | 70.00 | 69.07 | 71.98 | 88.48 | 66.82 | 61.35 |
| Density (GPR) calc. (kg/m$^3$) | 900 | 897 | 896 | 902 | 901 | 899 | 893 |
| MFR$_2$ (GPR) calc. (g/10 min) | 0.8 | 0.4 | 1.2 | 0.7 | 0.4 | 0.9 | 1.7 |
| Split % | 58.1 | 58.0 | 58.9 | 56.8 | 59.0 | 51.0 | 58.4 |
| Density (kg/m$^3$) | 916.60 | 915.50 | 913.30 | 912.80 | 911.80 | 912.40 | 912.50 |
| MFR$_2$ (g/10 min) | 1.79 | 1.42 | 1.37 | 1.26 | 0.82 | 1.22 | 1.70 |
| MFR$_5$ (g/10 min) | 4.68 | 3.89 | 3.44 | 3.32 | 2.12 | 3.03 | 4.52 |
| MFR$_{21}$ (g/10 min) | 35.0 | 32.0 | 24.8 | 24.7 | 15.6 | 21.5 | 34.7 |
| Cat total productivity (kg PE/g cat) | 3.49 | 4.21 | 3.20 | 5.46 | 4.90 | 6.70 | 2.02 |
| **Powder** | | | | | | | |
| Density (kg/m$^3$) | 917.6 | 916.0 | 915.1 | 913.4 | 912.9 | 914.3 | 912.9 |
| MFR$_2$ (g/10 min) | 1.58 | 1.54 | 1.30 | 1.30 | 0.89 | 1.21 | 1.59 |
| MFR$_5$ (g/10 min) | 4.10 | 4.09 | 3.33 | 3.49 | 2.32 | 3.06 | 4.26 |
| MFR$_{21}$ (g/10 min) | 31.00 | 30.70 | 24.00 | 24.80 | 16.80 | 21.50 | 31.80 |

The powders were mixed with 0.2 wt% Irganox B561 (BASF SE) and then compounded and extruded under nitrogen atmosphere to pellets using a CIMP90 extruder.

The properties of the polyethylene compositions of examples IE1-IE3 and CE1-CE4 are listed in Table 2 below.

Table 2: Properties of the polyethylene compositions of IE1-IE3 and CE1-CE4

| | CE1 | CE2 | CE3 | IE1 | IE2 | IE3 | CE4 |
|---|---|---|---|---|---|---|---|
| $MFR_2$ [g/10 min] | 1.71 | 1.58 | 1.32 | 1.33 | 0.89 | 1.19 | 1.53 |
| $MFR_5$ [g/10 min] | 4.15 | 7.41 | 3.34 | 3.49 | 2.40 | 3.10 | 4.08 |
| $MFR_{21}$ [g/10 min] | 31.40 | 31.40 | 24.10 | 25.30 | 16.80 | 21.40 | 31.60 |
| Density [kg/$m^3$] | 918.1 | 917.1 | 915.2 | 913.2 | 913.6 | 913.3 | 912.9 |
| C4 content [mol%] | 0.3 | 0.2 | 0.1 | 0.7 | 0.6 | 0.9 | 0.1 |
| C6 content [mol%] | 2.9 | 2.5 | 3.7 | 2.9 | 3.1 | 2.5 | 4.2 |
| Total comonomer content [mol%] | 3.2 | 3.5 | 3.8 | 3.6 | 3.7 | 3.3 | 4.4 |
| Melting Onset Temperature [°C] | 45.0 | 43.8 | 42.5 | 40.6 | 41.3 | 43.5 | 39.0 |
| Peak Temperature [°C] | 125.9 | 126.0 | 125.1 | 120.0 | 120.2 | 120.0 | 125.6 |
| Melting End Temperature [°C] | 131.9 | 132.1 | 131.7 | 126.6 | 127.2 | 126.4 | 132.0 |
| Rel. Crystallinity, $\alpha$ at Peak Temperature | 0.91 | 0.87 | 0.80 | 0.89 | 0.90 | 0.88 | 0.85 |
| Temperature at $\alpha$ = 0.5 [°C] | 115.3 | 116.0 | 117.8 | 105.5 | 105.1 | 108.4 | 119.9 |
| Enthalpy of Fusion [J/g] | 119.4 | 101.1 | 108.7 | 106.6 | 106.4 | 107.9 | 120.5 |
| Degree of crystallinity [%] | 41.2 | 34.9 | 37.5 | 36.8 | 36.7 | 37.2 | 41.6 |

Additionally, the lamella thicknesses of the compositions of examples IE1-IE3 and CE1-CE4 was measured by Successive Self-nucleation and Annealing (SSA) thermal fractionation as described above.

The DSC melting curves of samples subjected to SSA protocol is unique for each ethylene terpolymer material: function of catalyst, polymerization process/conditions, comonomer type and comonomer content. The area of the melting peaks at higher temperature decreases by increasing the amount of comonomer and/or by more homogenously distributing the comonomer along the polymer chain.

Based on amount of material that melts between different temperature ranges, it is possible to identify differences between the distribution of short chain branches.

The amounts of the fractions of different lamella thicknesses of the polyethylene compositions of examples IE1-IE3 and CE1-CE4 are summarized in Table 3. Thereby, the fractions of different lamella thicknesses are divided in the following groups in the columns from left to right:

Fraction with a lamella thickness of not more than 6.1 nm (≤6.1 nm),
Fraction with a lamella thickness of more than 6.1 nm to 8.1 nm (>6.1 to ≤8.1 nm),
Fraction with a lamella thickness of more than 8.1 nm to 11.8 nm (>5.0 to ≤11.8 nm),
Fraction with a lamella thickness of more than 11.8 nm to 21.7 nm (>11.8 to ≤21.7 nm) and
Fraction with a lamella thickness of more than 21.7 nm (>21.7 nm)

Table 3: Amounts of the fractions of different lamella thicknesses in wt%

| Fractions | CE1 | CE2 | CE3 | IE1 | IE2 | IE3 | CE4 |
|---|---|---|---|---|---|---|---|
| <6.1 nm | 30.9 | 31.7 | 31.5 | 40.6 | 40.9 | 36.6 | 30.7 |
| >6.1 to ≤8.1 nm | 11.4 | 10.2 | 9.5 | 20.0 | 20.2 | 19.7 | 7.5 |
| >8.1 to ≤11.8 nm | 15.8 | 14.6 | 13.8 | 29.2 | 26.4 | 30.9 | 11.9 |
| >11.8 to ≤21.7 nm | 41.9 | 43.5 | 45.2 | 10.2 | 12.4 | 12.8 | 49.8 |
| >21.7 nm | 0.1 | 0.1 | 0.1 | 0 | 0 | 0 | 0.1 |

The polyethylene compositions of inventive examples IE1 to IE3 show considerably higher amounts of fractions at low lamellar thicknesses of 0 to 11.8 nm compared to the polyethylene compositions of comparative examples CE1 to CE4.

## 3. Films

From the polyethylene compositions of examples IE1 to IE3 and CE1 to CE4 monolayer blown films were produced using a Collins line monolayer blown film line.

The die diameter was 150 mm, die gap was 1.8 mm, total film thickness of film was 40 μm. The lower neck-height and blow-up ratio (BUR) was 2.5.

The extrusion conditions and film properties are listed in Table 4.

All samples were easy to process and exhibited good bubble stability.

Table 4: Extrusion conditions and properties of the blown films of CE1, CE2, IE1 and IE2

|  | CE1 | CE2 | CE3 | IE1 | IE2 | IE3 | CE4 |
|---|---|---|---|---|---|---|---|
| **Extrusion conditions:** |  |  |  |  |  |  |  |
| Motor load (A) | 84 | 72 | 80 | 73 | 76 | 88 | 80 |
| Extruder throughput (kg/h) | 61.5 | 59.9 | 61.1 | 59.5 | 59.5 | 59.6 | 60.1 |
| Melt pressure (bar) | 183 | 185 | 215 | 176 | 198 | 246 | 222 |
| Melt temperature (°C) | 218 | 218 | 224 | 219 | 223 | 223 | 226 |
| **Properties:** |  |  |  |  |  |  |  |
| DDI, method A [g] | 510 | 1200 | 1104 | >1200 | >1200 | >1200 | 814 |
| Hot tack temperature at 1 N, Max force vs temp [°C] | 93 | 89 | 86 | 84 | 82 | 85 | 86 |
| Gloss, 60° [GU] | 47.8 | 23.6 | 60.2 | 50.2 | 55.9 | 37.8 | 37.8 |

The films made of the polymer composition according to the invention in examples IE1 to IE3 show an excellent balance of properties in regard of mechanical properties, sealing behaviour and optical properties.

## Claims

1. A polyethylene composition comprising a multimodal terpolymer of ethylene and two different comonomers independently selected from alpha-olefin comonomers having from 4 to 10 carbon atoms,

   wherein the multimodal terpolymer comprises a first copolymer fraction being a copolymer of ethylene and a first comonomer selected from alpha-olefin comonomers having from 4 to 10 carbon atoms and a second copolymer fraction being a copolymer of ethylene and a second comonomer selected from alpha-olefin comonomers having from 4 to 10 carbon atoms, wherein the first comonomer differs from the second comonomer in their amount of carbon atoms, and
   has a density of from 910 to less than 915 kg/m$^3$, preferably from 911.0 to 914.5 kg/m$^3$, more preferably from 911.5 to 914.0 kg/$^3$, determined according to ISO 1183, and wherein the polyethylene composition has a melt flow rate MFR$_2$ of from 0.5 to 2.5 g/10 min, preferably from 0.6 to 2.2 g/10 min, more preferably from 0.7 to 2.0 g/10 min, determined according to ISO 1133 at 190°C and 2.16 kg.

2. The polyethylene composition according to claim 1, wherein the first comonomer is 1-butene and the second comonomer is 1-hexene, wherein the polyethylene composition preferably has a total comonomer content of from 2.4 to 6.0 mol%, preferably 2.7 to 5.0 mol%, more preferably 3.0 to 4.5 mol%, based on the total molar content of monomer units of the polyethylene composition.

3. The polyethylene composition according to claims 1 or 2, wherein the polyethylene composition has a comonomer content of the first comonomer of from 0.4 to 2.0 mol%, preferably from 0.5 to 1.5 mol%, more preferably from 0.6 to 1.2 mol%, based on the total molar content of monomer units of the polyethylene composition.

4. The polyethylene composition according to any one of the preceding claims, wherein the polyethylene composition has a comonomer content of the second comonomer of from 2.0 to 4.0 mol%, preferably from 2.2 to 3.5 mol%, more preferably from 2.4 to 3.3 mol%, based on the total molar content of monomer units of the polyethylene composition.

5. The polyethylene composition according to any one of the preceding claims, wherein the polyethylene composition has

   • a melt flow rate $MFR_5$ of from 1.5 to 7.0 g/10 min, preferably from 1.7 to 6.0 g/10 min, more preferably from 2.0 to 5.0 g/10 min, determined according to ISO 1133 at 190°C and 5 kg; and/or
   • a melt flow rate $MFR_{21}$ of from 10.0 to 35.0 g/10 min, preferably from 12.5 to 32.5 g/10 min, more preferably from 15.0 to 30.0 g/10 min, determined according to ISO 1133 at 190°C and 21.6 kg; and/or
   • a flow rate ratio $FRR_{21/2}$, being the ratio of $MFR_{21}$ to $MFR_2$ of from 15.0 to 25.0, preferably from 16.5 to 23.5, more preferably from 17.5 to 22.5; and/or
   • a flow rate ratio $FRR_{21/5}$, being the ratio of $MFR_{21}$ to $MFR_5$ of from 4.5 to 10.0, preferably from 5.5 to 9.0, more preferably from 6.0 to 8.0.

6. The polyethylene composition according to any one of the preceding claims, wherein the polyethylene composition has a polydispersity index being the ratio of weight average molecular weight to number average molecular weight Mw/Mn of from 2.0 to 6.0, preferably from 2.5 to 5.5.

7. The polyethylene composition according to any one of the preceding claims, wherein the polyethylene composition has

   • a melting temperature of from 120 to 130°C, preferably from 123 to 128°C determined by DSC measurement; and/or
   • an enthalpy of fusion of from 100 to 115 J/g, preferably from 103 to 110 J/g, determined by DSC measurement; and/or
   • a degree of crystallinity of from 30 to 40%, preferably from 35 to 38%, determined by DSC measurement.

8. The polyethylene composition according to any one of the preceding claims, wherein the polyethylene composition has a molecular structure comprising fractions of varying lamellar thickness, and wherein

   • the amount of the fraction having a lamellar thickness of more than 11.8 nm to 21.7 nm is from 5.0 to 25.0%, preferably from 7.5 to 22.5%, more preferably from 10.0 to 20.0%, based on the total amount of lamellar fractions; and/or
   • the amount of the fraction having a lamellar thickness of more than 8.1 nm to 11.8 nm is from 17.5 to 40.0%, preferably from 20.0 to 37.5%, more preferably from 22.5 to 35.0%, based on the total amount of lamellar fractions; and/or
   • the amount of the fraction having a lamellar thickness of more than 6.1 nm to 8.1 nm is from 12.5 to 30.0%, preferably from 15.0 to 27.5%, more preferably from 17.5 to 25.0%, based on the total amount of lamellar fractions; and/or
   • the amount of the fraction having a lamellar thickness of 0 nm to 6.1 nm is from 30.0 to 50.0%, preferably from 32.5 to 47.5%, more preferably from 35.0 to 45.0%, based on the total amount of lamellar fractions,

   wherein the amount of the fractions having varying lamellar thicknesses is determined by Successive Self-nucleation and Annealing (SSA) thermal fractionation.

9. A process for producing the polyethylene composition according to any one of the preceding claims, wherein the first copolymer fraction and the second copolymer fraction are polymerized both in the presence of a single site catalyst in different polymerization reactors of a multistage polymerization process.

10. The process according to claim 9 comprising the steps of:

   a) polymerizing in a first polymerization reactor ethylene and the first comonomer in the presence of the single site catalyst and obtaining a first reaction mixture comprising the first copolymer fraction and the single site catalyst;
   b) transferring the first reaction mixture from the first polymerization reactor to a second polymerization reactor;
   c) polymerizing in the second polymerization reactor ethylene and the second comonomer in the presence of the single site catalyst and the first copolymer fraction and obtaining a second reaction mixture comprising the first copolymer fraction, the second copolymer fraction and the single site catalyst;

d) withdrawing the second reaction mixture from the second polymerization reactor; and

e) compounding the second reaction mixture and obtaining the polyethylene composition.

11. The process according to claims 9 and 10, wherein the molar ratio of the first comonomer to ethylene for the polymerization of the first copolymer fraction is in the range of more than 110 mol/kmol to 350 mol/kmol, preferably from 125 mol/kmol to 300 mol/kmol, more preferably from 150 to 275 mol/kmol and/or the molar ratio of the second comonomer to ethylene for the polymerization of the second copolymer fraction is in the range of 15 mol/kmol to less than 41 mol/kmol, preferably from 17 mol/kmol to 40 mol/kmol, more preferably from 20 to 30 mol/kmol.

12. An article, preferably a film, comprising the polyethylene composition according to any one of the preceding claims.

13. The article according to claim 12, being a film having

• a dart drop impact (DDI) strength of at least 1000 g, preferably at least 1100 g, more preferably at least 1200 g, determined according to ISO7765-1, method A on a monolayer blown film having a thickness of 40 μm; and/or
• a hot tack temperature at 1 N maximum force of from 65 to 90°C, preferably from 70 to 88°C, more preferably from 75 to 85°C, determined according to ASTM F 1921 on a monolayer blown film having a thickness of 40 μm; and/or
• a gloss at 60° of 20 to 50, determined according to ISO 2813 on a monolayer blown film having a thickness of 40 μm.

14. The article according to claim 12 or 13, being a monolayer film, a layer of a multilayer film for flexible packaging, a collation shrink film or a heavy duty shipping sack.

15. Use of a polyethylene composition according to any one of claims 1 to 11 for the production of an article, preferably a film, more preferably a monolayer film, a layer of a multilayer film for flexible packaging, a collation shrink film or a heavy duty shipping sack.

Europäisches Patentamt
European Patent Office
Office européen des brevets

## EUROPEAN SEARCH REPORT

Application Number

EP 22 18 8454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/191019 A1 (BOREALIS AG [AT]) 30 September 2021 (2021-09-30) * page 6, lines 9-12 * * pages 27-28; example IE4; tables 1-3 * | 1-6,8-15 | INV. C08F210/16 C08L23/08 C08J5/18 |
| X | WO 2022/018239 A1 (BOREALIS AG [AT]) 27 January 2022 (2022-01-27)<br><br>* pages 25-26; example IE3; tables 1-2 * | 1,2,4, 6-12,14, 15 | |
| A | EP 4 019 583 A1 (ABU DHABI POLYMERS CO LTD BOROUGE LLC [AE]; BOREALIS AG [AT]) 29 June 2022 (2022-06-29) * the whole document * | 1-15 | |
| E | EP 4 056 599 A1 (BOREALIS AG [AT]) 14 September 2022 (2022-09-14) * pages 15-16; example IE2; tables 1-2 * | 1,2,4,5, 8-15 | |
| E | EP 4 108 434 A1 (BOREALIS AG [AT]) 28 December 2022 (2022-12-28)<br><br>* pages 16-17; example IE2; tables 1-2 * | 1,2,4,5, 8-10, 12-15 | TECHNICAL FIELDS SEARCHED (IPC)<br><br>C08F |
| E | EP 4 108 437 A1 (BOREALIS AG [AT]) 28 December 2022 (2022-12-28)<br><br>* pages 19-20; example IE2; tables 1-2 * | 1,2,4,5, 8-10, 12-15 | |

The present search report has been drawn up for all claims

| Place of search | Date of completion of the search | Examiner |
|---|---|---|
| Munich | 17 January 2023 | Luka, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 18 8454

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2023

| Patent document cited in search report | | Publication date | Patent family member(s) | | Publication date |
|---|---|---|---|---|---|
| WO 2021191019 | A1 | 30-09-2021 | CN | 115335420 A | 11-11-2022 |
| | | | EP | 4126994 A1 | 08-02-2023 |
| | | | KR | 20220144406 A | 26-10-2022 |
| | | | WO | 2021191019 A1 | 30-09-2021 |
| WO 2022018239 | A1 | 27-01-2022 | NONE | | |
| EP 4019583 | A1 | 29-06-2022 | EP | 4019583 A1 | 29-06-2022 |
| | | | TW | 202231680 A | 16-08-2022 |
| | | | WO | 2022144275 A1 | 07-07-2022 |
| EP 4056599 | A1 | 14-09-2022 | EP | 4056599 A1 | 14-09-2022 |
| | | | WO | 2022189374 A1 | 15-09-2022 |
| EP 4108434 | A1 | 28-12-2022 | EP | 4108434 A1 | 28-12-2022 |
| | | | WO | 2022268963 A1 | 29-12-2022 |
| EP 4108437 | A1 | 28-12-2022 | EP | 4108437 A1 | 28-12-2022 |
| | | | WO | 2022268965 A1 | 29-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 257895 A1
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 9212182 A
- WO 9618662 A
- US 4582816 A
- US 3405109 A
- US 3324093 A
- EP 479186 A
- US 5391654 A

- EP 1310295 A
- EP 1591460 A
- WO 2007025640 A
- US 4543399 A
- EP 699213 A
- WO 9425495 A
- EP 696293 A
- EP 1415999 A
- WO 0026258 A
- EP 887379 A
- EP 887380 A
- EP 887381 A
- EP 991684 A
- WO 0029452 A
- US 4621952 A
- EP 188125 A
- EP 250169 A
- EP 579426 A

**Non-patent literature cited in the description**

- **A.J. MÜLLER ; M.L. ARNAL.** Thermal fractionation of polymers. *Prog. Polym. Sci.,* 2005, vol. 30, 559-603

- Thermodynamic quantities governing melting. **L. MANDELKERN ; R.G. ALAMO.** Phys. Prop. Polym. Handb. Springer, 2007, 165-186